(19)

Europäisches
Patentamt
European
Patent Office
Office européen
des brevets

(11) **EP 4 404 318 A1**

(12) **EUROPEAN PATENT APPLICATION**

(43) Date of publication:
   **24.07.2024 Bulletin 2024/30**

(21) Application number: **24151620.2**

(22) Date of filing: **12.01.2024**

(51) International Patent Classification (IPC):
   **H01M 10/04** (2006.01)    **H01M 50/102** (2021.01)
   **H01M 50/103** (2021.01)

(52) Cooperative Patent Classification (CPC):
   **H01M 50/102; H01M 10/0418; H01M 50/103**

(84) Designated Contracting States:
   **AL AT BE BG CH CY CZ DE DK EE ES FI FR GB
   GR HR HU IE IS IT LI LT LU LV MC ME MK MT NL
   NO PL PT RO RS SE SI SK SM TR**
   Designated Extension States:
   **BA**
   Designated Validation States:
   **KH MA MD TN**

(30) Priority: **19.01.2023 JP 2023006850**

(71) Applicant: **TOYOTA JIDOSHA KABUSHIKI
   KAISHA**
   **Toyota-shi, Aichi-ken, 471-8571 (JP)**

(72) Inventor: **FUJISAKI, Sadao**
   **Toyota-shi, 471-8571 (JP)**

(74) Representative: **J A Kemp LLP
   80 Turnmill Street
   London EC1M 5QU (GB)**

(54) **BATTERY**

(57)    A battery has: an electrode body; a positive electrode foil and a negative electrode foil provided at surfaces of the electrode body; a metal exterior body pair formed from a positive electrode metal exterior body that contacts the positive electrode foil and a negative electrode metal exterior body that contacts the negative electrode foil; and resins that fix the electrode body and the metal exterior body pair. Outer surfaces of the metal exterior body pair are exposed so as to enable electrical connection with an exterior. At least one of the positive electrode metal exterior body or the negative electrode metal exterior body is shaped as a box having a bottom plate that is quadrilateral and four side plates that each share one side with the bottom plate, and accommodates the electrode body at an inner side of the box shape. The positive electrode metal exterior body, the negative electrode metal exterior body, and side surfaces of the electrode body are respectively insulated by the resins.

FIG.1

EP 4 404 318 A1

**Description**

BACKGROUND

Technical Field

The present disclosure relates to a battery.

Related Art

Conventionally, batteries in which an electrode body is sealed by a laminate film that serves as an exterior body have been used from the standpoints of battery strength and of suppressing permeation of water vapor into the interior of the battery.
For example, Japanese Patent Application Laid-Open (JP-A) No. 2021-150073 discloses a solid-state battery having: an exterior body; a sealing portion provided at the exterior body; a bipolar electrode body accommodated at the inner side of the sealing portion of the exterior body; a tab that passes-through the sealing portion from the bipolar electrode body and projects-out to the exterior of the exterior body; and a heat conducting portion provided at the interior of the exterior body. The heat conducting portion is insulating, and contains a resin and a heat conducting material whose heat conductivity is higher than the resin. The heat conducting portion contacts the bipolar electrode body and the tab.

On the other hand, batteries in which the electrode body is sealed by an exterior body that is not a laminate film also have been disclosed.
For example, JP-A No. 2017-220447 discloses an all-solid-state battery including: a layered battery in which plural collector layers, positive electrode composite material layers, solid electrolyte layers and negative electrode composite material layers are respectively layered, and the collector layer, the positive electrode composite material layer and the negative electrode composite material layer structure a bipolar electrode layer; outermost collectors that structure the layering direction both end surfaces of the layered battery; and resins that cover only the side surfaces of the layered battery. At least one layer among the collector layer, the positive electrode composite material layer, the solid electrolyte layer and the negative electrode composite material layer extends-out toward the outer side further than the other layers and is an extending layer. A plurality of these extending layers extend-out at the side surfaces of the layered battery. The resins enter into the gaps between ones of the extending layers and others of the extending layers. A battery case for sealing the layered battery other than the outermost collectors is structured by the outermost collectors and the resins, and the outermost collectors are the battery terminals.

Further, International Publication No. 2021/149644 discloses a secondary battery formed to have an electrode assembly and an exterior body that houses the electrode assembly. The exterior body is formed to have a two-part structure of a first metal exterior body and a second metal exterior body. The first metal exterior body and the second metal exterior body that are metal members are assembled together without being caulked.

SUMMARY

In a conventional battery, a laminate film for example is used as the exterior body. However, in order for the laminate film to exhibit moisture permeation resistance (i.e., water vapor barrier performance), the surface area of the region where the end portions of the laminate film are thermally welded must be made to be large. The structural efficiency of the battery thereby deteriorates. Further, a terminal for external connection must be exposed to the exterior of the laminate film from a side surface side of the electrode body, and the structural efficiency deteriorates for this reason as well.

The present disclosure was made in view of the above-described circumstances, and an object thereof is to provide a battery that maintains moisture permeation resistance and has good structural efficiency.

A battery of a first aspect of the present disclosure including:

an electrode body;
a positive electrode foil provided at one surface of the electrode body;
a negative electrode foil provided at another surface of the electrode body;
a metal exterior body pair formed from a positive electrode metal exterior body that contacts the positive electrode foil and is formed of metal, and a negative electrode metal exterior body that contacts the negative electrode foil and is formed of metal; and
a resin that fixes the electrode body and the metal exterior body pair,
wherein outer surfaces of the metal exterior body pair are exposed so as to enable electrical connection with an exterior,
wherein at least one of the positive electrode metal exterior body or the negative electrode metal exterior body is shaped as a box having a bottom plate that is quadrilateral and four side plates that each share one side with the bottom plate, and accommodates the electrode body at an inner side of the box shape, and
wherein the positive electrode metal exterior body, the negative electrode metal exterior body, and side surfaces of the electrode body are respectively insulated by the resin.

A battery of a second aspect according to the present disclosure is the battery of the first aspect, wherein:

the positive electrode metal exterior body and the negative electrode metal exterior body are both box shaped,
the positive electrode metal exterior body and the negative electrode metal exterior body overlap such that sides of the positive electrode metal exterior body and the negative electrode metal exterior body having the side plates face one another, and
a surface area of one of the bottom plate of the positive electrode metal exterior body or the bottom plate of the negative electrode metal exterior body is larger than another, and all of the side plates of the metal exterior body at which a surface area of the bottom plate is smaller are accommodated at inner sides of all of the side plates of the metal exterior body at which a surface area of the bottom plate is larger.

A battery of a third aspect according to the present disclosure is the battery of the second aspect, wherein:

the battery has, as the resin, a first resin that is interposed between the side surfaces of the electrode body and the side plates of the metal exterior body at which the surface area of the bottom plate is smaller, and a second resin that is interposed between the side plates of the metal exterior body at which the surface area of the bottom plate is smaller and the side plates of the metal exterior body at which the surface area of the bottom plate is larger,
the first resin is a resin that has a better insulating ability than the second resin, and
the second resin is a resin that has better moisture permeation resistance than the first resin.

A battery of a fourth aspect according to the present disclosure is the battery of the second aspect or the third aspect, wherein the metal exterior body at which the surface area of the bottom plate is larger is the negative electrode metal exterior body.
A battery of a fifth aspect according to the present disclosure is the battery of any one of the second aspect to the fourth aspect, wherein:

the resin is filled-in between the side surfaces of the electrode body and the side plates of the metal exterior body at which the surface area of the bottom plate is smaller, and between the side plates of the metal exterior body at which the surface area of the bottom plate is smaller and the side plates of the metal exterior body at which the surface area of the bottom plate is larger,
a distance from the side plate of the metal exterior body at which the surface area of the bottom plate is smaller to the side plate of the metal exterior body at which the surface area of the bottom plate is larger is from 0.1 mm to 1.0 mm, and
a distance in a thickness direction of the electrode body from an end, which is at a side opposite the bottom plate, at the side plate of the metal exterior body at which the surface area of the bottom plate is smaller to an end, which is at the side opposite the bottom plate, at the side plate of the metal exterior body at which the surface area of the bottom plate is larger is from 1.0 mm to 50.0 mm.

A battery of a sixth aspect according to the present disclosure is the battery of any one of the first aspect to the fifth aspect, wherein the battery is a solid-state battery.
A battery of a seventh aspect according to the present disclosure is the battery of any one of the first aspect to the sixth aspect, wherein, at the electrode body, plural bipolar electrodes are layered via solid electrolyte layers.
In accordance with the present disclosure, there can be provided a battery that maintains moisture permeation resistance and has good structural efficiency.

BRIEF DESCRIPTION OF THE DRAWINGS

Fig. 1 is a schematic sectional view illustrating a battery relating to an embodiment of the present disclosure;
Fig. 2 is a schematic perspective view illustrating an electrode body, a positive electrode foil and a negative electrode foil of the battery relating to the embodiment of the present disclosure;
Fig. 3 is a schematic perspective view illustrating a positive electrode metal exterior body and a negative electrode metal exterior body of the battery relating to the embodiment of the present disclosure;
Fig. 4 is a schematic sectional view illustrating a battery relating to another embodiment of the present disclosure;
Fig. 5 is a schematic sectional view illustrating a conventional battery that uses a laminate sheet as an exterior body;
Fig. 6 is a schematic sectional view illustrating an example of a solid-state battery; and
Fig. 7 is a graph illustrating the relationship between length of a sealing portion, thickness of a sealing portion, and an amount of moisture permeation.

DETAILED DESCRIPTION

A battery of the present disclosure is described in detail hereinafter by using the drawings. The respective drawings described hereinafter are schematic illustrations, and sizes and shapes of respective portions are exaggerated when appropriate in order to facilitate understanding.

<Battery Structure>

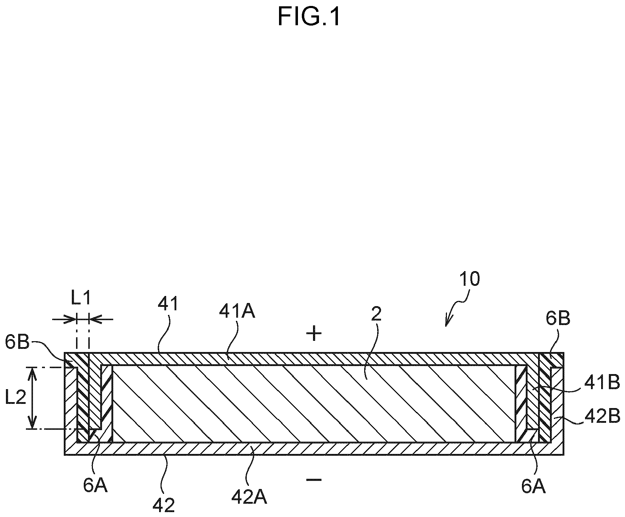

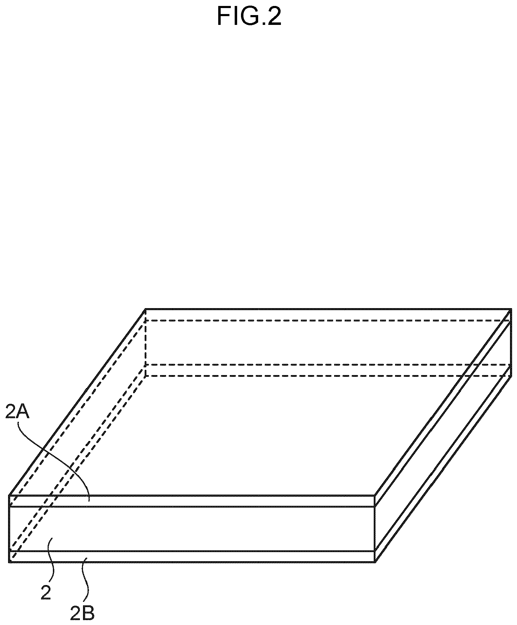

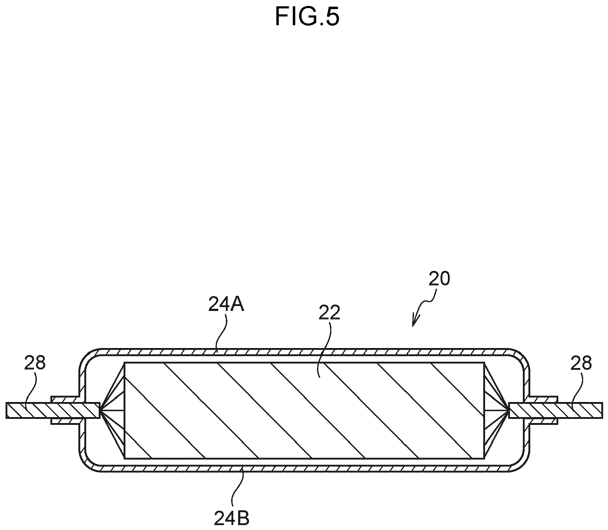

Fig. 1 is a schematic sectional view illustrating a battery relating to an embodiment of the present disclosure. Fig. 2 is a schematic perspective view illustrating an electrode body, a positive electrode foil and a negative electrode foil of the battery relating to the embodiment of the present disclosure. A battery 10 relating to the present disclosure has an electrode body 2, a metal exterior body pair formed from a positive electrode metal exterior body 41 and a negative electrode metal exterior body 42, and resins 6A and 6B. Further, as illustrated in Fig. 2, the battery has a positive electrode foil 2A, which is provided between the electrode body 2 and the positive electrode metal exterior body 41 so as to contact the positive electrode side surface of the electrode body 2, and a negative electrode foil 2B, which is provided between the electrode body 2 and the negative electrode metal exterior body 42 so as to contact the negative electrode side surface of the electrode body 2. (The positive electrode foil 2A and the negative electrode foil 2B are omitted in Fig. 1.)

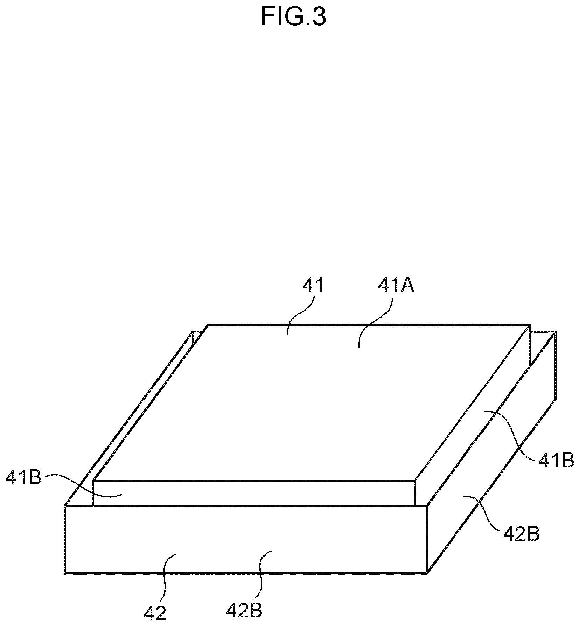

Fig. 3 is a schematic perspective view illustrating only the positive electrode metal exterior body 41 and the negative electrode metal exterior body 42 of the battery relating to the embodiment of the present disclosure.
The positive electrode metal exterior body 41 at the metal exterior body pair is formed of metal, and is disposed so as to contact the positive electrode foil 2A. The negative electrode metal exterior body 42 is formed of metal, and is disposed so as to contact the negative electrode foil 2B. At least portions of the outer surfaces of the positive electrode metal exterior body 41 and the negative electrode metal exterior body 42 of the metal exterior body pair are exposed to as to enable electrical connection with the exterior. As illustrated in Fig. 1 and Fig. 3, the positive electrode metal exterior body 41 is formed in the shape of a box having a bottom plate 41A that is quadrilateral and four side plates 41B that each share one side with the bottom plate 41A. The positive electrode metal exterior body 41 houses the electrode body 2 at the inner side of the box shape that is formed by the bottom plate 41A and the side plates 41B. The negative electrode metal exterior body 42 is formed in the shape of a box having a bottom plate 42A that is quadrilateral and four side plates 42B that each share one side with the bottom plate 42A. The negative electrode metal exterior body 42 houses the electrode body 2 at the inner side of the box shape that is formed by the bottom plate 42A and the side plates 42B. The positive electrode metal exterior body 41 and the negative electrode metal exterior body 42 are superposed such that the sides having the side plates 41B and the sides having the side plates 42B face one another. The surface area of the bottom plate 42A at the negative electrode metal exterior body 42 is larger than that of the bottom plate 41A at the positive electrode metal exterior body 41, and all of the side plates 41B of the positive electrode metal exterior body 41 are accommodated at the inner sides of all of the side plates 42B of the negative electrode metal exterior body 42.
As illustrated in Fig. 1, the resins 6A and 6B fix the electrode body 2 and the metal exterior body pair that is formed from the positive electrode metal exterior body 41 and the negative electrode metal exterior body 42. The resin 6A is interposed between the side surfaces of the electrode body 2 and the side plates 41B of the positive electrode metal exterior body 41, and the side surfaces of the electrode body 2 are covered by the resin 6A. The resin 6B is interposed between the side plates 41B of the positive electrode metal exterior body 41 and the side plates 42B of the negative electrode metal exterior body 42. The side surfaces of the electrode body 2 are insulated from the metal exterior body pair, which is formed from the positive electrode metal exterior body 41 and the negative electrode metal exterior body 42, by the resins 6A and 6B. Further, the positive electrode metal exterior body 41 and the negative electrode metal exterior body 42 are insulated by the resins 6A and 6B. The positive electrode metal exterior body 41, the negative electrode metal exterior body 42 and the side surfaces of the electrode body 2 are respectively insulated by the resins 6A and 6B, and the occurrence of short circuits is thereby suppressed.
In a conventional battery, for example, a laminate film is used as the exterior body. For example, one laminate film is folded-over and covers the electrode body, and one end side and the another end side of the laminate film are superposed together and are sealed by heat welding. Further, as illustrated in Fig. 5, there is also the example of a battery 20 in which two laminate films 24A and 24B are superposed and cover an electrode body 22 that has terminals 28, and the battery 20 is sealed due to the end portions of the two laminate films 24A and 24B being heat welded together. However, the surface areas of the regions that are heat welded (hereinafter called sealing portions) must be made to be large in order to obtain good strength and moisture permeation resistance (i.e., the ability to act as a barrier to water vapor) at the laminate films, and due thereto, the efficiency of manufacturing the battery deteriorates.

Further, in a case of using laminate films as the exterior body, the terminals for external connection (the positive electrode terminal and the negative electrode terminal) must be exposed to the exterior of the laminate films from the side surface sides of the electrode body, and for this reason as well, the structural efficiency deteriorates.

In contrast, the battery relating to the present disclosure uses the metal exterior body, which is formed from the positive electrode metal exterior body and the negative electrode metal exterior body, as the exterior body instead of a laminate film, and the electrode body and the metal exterior body pair are fixed by resins. Further, one or both of the positive electrode metal exterior body and the negative electrode metal exterior body is shaped as a box having a bottom plate that is quadrilateral and four side plates that each share one side with the bottom plate, and accommodates the electrode body at the inner side of the box shape. Due to the electrode body and the metal exterior body pair being fixed and made integral by the resins, and at least one of the metal exterior body pair being formed in the shape of a box, the strength and the moisture permeation resistance (water vapor barrier ability) that are required of a battery can be ensured. Further, because there is no need for a heat-welded region (a sealed portion) that is necessary in a case in which a laminate film is used, the structural efficiency can be improved.

The positive electrode metal exterior body and the negative electrode metal exterior body are formed of metal. The positive electrode metal exterior body contacts the positive electrode foil, and the negative electrode metal exterior body contacts the negative electrode foil. Moreover, at least a portion of the outer surface of each of the positive electrode metal exterior body and the negative electrode metal exterior body is exposed so as to enable electrical connection with the exterior. Due thereto, the positive electrode metal exterior body and the negative electrode metal exterior body can be made to function as terminals. In other words, the positive electrode and the negative electrode at the electrode body can be electrically connected to the exterior through the positive electrode metal exterior body and the negative electrode metal exterior body, respectively. Therefore, the providing of terminals that are exposed to the exterior from the side surface sides of the electrode body, which is necessary in a case of using a laminate film, becomes unnecessary, and the structural efficiency can be improved for this reason as well.

Due to the above, in accordance with the battery relating to the present disclosure, the moisture permeation resistance can be maintained and the structural efficiency of the battery can be improved.

In the battery 10 illustrated in Fig. 1 and Fig. 3, the metal exterior body at which the surface area of the bottom plate is larger is the negative electrode metal exterior body 42. In this way, in the battery relating to the present disclosure, the metal exterior body at which the surface area of the bottom plate is larger can be made to be the negative electrode metal exterior body, from the standpoint of preventing short-circuiting.

In the battery 10 illustrated in Fig. 1 and Fig. 3, the surface area of the bottom plate 42A at the negative electrode metal exterior body 42 is larger than that of the bottom plate 41A at the positive electrode metal exterior body 41, and all of the side plates 41B at the positive electrode metal exterior body 41 are accommodated at the inner sides of all of the side plates 42B at the negative electrode metal exterior body 42. In this way, in the battery relating to the present disclosure, there is preferably a structure in which the surface area of one of the bottom plate at the positive electrode metal exterior body and the bottom plate at the negative electrode metal exterior body is larger than the other, and all of the side plates of the metal exterior body at which the surface area of the bottom plate is smaller are accommodated at the inner sides of all of the side plates of the metal exterior body at which the surface area of the bottom plate is larger. This structure is a structure in which the outer sides of the side surfaces of the electrode body are covered doubly by metal exterior bodies, by the side plates of the metal exterior body at which the surface area of the bottom plate is smaller and the side plates of the metal exterior body at which the surface area of the bottom plate is larger. Due thereto, in relation to the resin that covers the side surfaces of the electrode body, the distance from the side surface of the electrode body to the place where the resin is exposed to the exterior of the battery can be made to be long, and the moisture permeation resistance (water vapor barrier ability) can be improved. Further, the strength of the side surface sides of the electrode body can be improved.

At the battery 10 illustrated in Fig. 1, the resins 6A and 6B are filled-in between the side surfaces of the electrode body 2 and the side plates 41B at the positive electrode metal exterior body 41, and between the side plates 41B at the positive electrode metal exterior body 41 and the side plates 42B at the negative electrode metal exterior body 42. In a case in which, in this way, resins are filled-in between the side surfaces of the electrode body and the side plates of the metal exterior body at which the surface area of the bottom plate is smaller, and between the side plates of the metal exterior body at which the surface area of the bottom plate is smaller and the side plates of the metal exterior body at which the surface area of the bottom plate is larger, the lengths of the resins at respective places are preferably the following lengths.

The distance from a side plate of the metal exterior body at which the surface area of the bottom plate is smaller to a side plate of the metal exterior body at which the surface area of the bottom plate is larger (e.g., in the battery 10 illustrated in Fig. 1, distance L1 from the side plate 41B at the positive electrode metal exterior body 41 to the side plate 42B at the negative electrode metal exterior body 42) is preferably 0.1 mm or more and 1.0 mm or less. Due to the distance being 0.1 mm or more, it is even easier to suppress short-circuiting between the metal exterior bodies. On the other hand, due to the distance being 1.0 mm or less, the structural efficiency of the battery can be improved more, and the moisture permeation resistance (water vapor barrier ability) can be improved more. The aforementioned distance (distance L1 in Fig. 1) is even more preferably 0.3 mm or more and 0.7 mm or less.

Note that the distance between a side plate of the metal exterior body at which the surface area of the bottom plate is smaller and a side plate of the metal exterior body at which the surface area of the bottom plate is larger is measured at five arbitrary places of each of the four side plates of the metal exterior bodies (a total of 20 places), and the average value thereof is used as the aforementioned distance (distance L1 in Fig. 1).

The distance in the thickness direction of the electrode body from the end, which is at the side opposite the bottom plate, at a side plate of the metal exterior body at which the surface area of the bottom plate is smaller to the end, which is at the side opposite the bottom plate, at a side plate of the metal exterior body at which the surface area of the bottom plate is larger (e.g., in the battery 10 illustrated in Fig. 1, distance L2 in the thickness direction of the electrode body 2 (i.e., the up-down direction in Fig. 1) from the end, which is at the side opposite the bottom plate 41A, of the side plate 41B of the positive electrode metal exterior body 41 to the end, which is at the side opposite the bottom plate 42A, of the side plate 42B of the negative electrode metal exterior body 42) is preferably 1.0 mm or more and 50.0 mm or less. Due to the distance being 1.0 mm or more, the moisture permeation resistance (water vapor barrier ability) can be improved more. On the other hand, due to the distance being 50.0 mm or less, poor filling of the resins can be prevented. The aforementioned distance (distance L2 in Fig. 1) is more preferably 2.0 mm or more and 10.0 mm or less.

Note that the distance, in the thickness direction of the electrode body, from the end, which is at the side opposite the bottom plate, of a side plate of the metal exterior body at which the surface area of the bottom plate is smaller to the end, which is at the side opposite the bottom plate, of a side plate of the metal exterior body at which the surface area of the bottom plate is larger is measured at five arbitrary places of each of the four side plates of the metal exterior bodies (a total of 20 places), and the average value thereof is used as the aforementioned distance (distance L2 in Fig. 1).

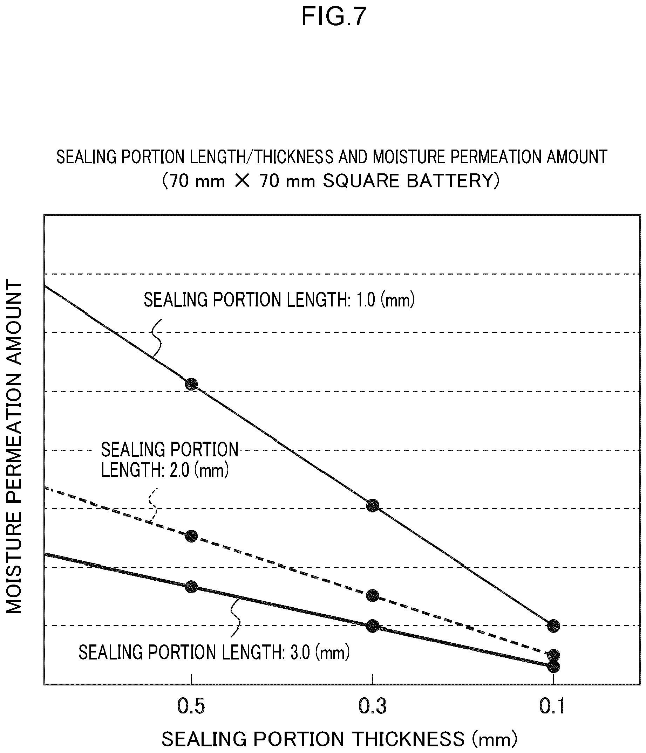

Note that moisture was made to permeate through an evaluation sample of the resin for a given time period, and a permeation factor of the moisture at the resin was measured, and the results of calculating the permeation amount by the following calculation formula (i.e., a graph) are shown in Fig. 7. Note that a thermoplastic resin was used as the resin of the evaluation sample.

$$\text{formula: moisture permeation amount (g/day)} = (\sigma/I \times S) \times RH$$

(In the formula, $\sigma$ represents the permeation factor, I represents the distance (distance L2 in Fig. 1) in the thickness direction of the electrode body from the end, which is at the side opposite the bottom plate, of a side plate of the metal exterior body at which the surface area of the bottom plate is smaller to the end, which is at the side opposite the bottom plate, of a side plate of the metal exterior body at which the surface area of the bottom plate is larger, S represents the sectional surface area of permeation, and RH represents the relative humidity.)

As illustrated in Fig. 7, it can be understood that, the shorter the distance from a side plate of the metal exterior body at which the surface area of the bottom plate is smaller to a side plate of the metal exterior body at which the surface area of the bottom plate is larger (distance L1 in Fig. 1, called "sealing portion thickness" in Fig. 7), the more that permeation of moisture is suppressed. Further, it can be understood that, the longer the distance, in the thickness direction of the electrode body, from the end, which is at the side opposite the bottom plate, of a side plate of the metal exterior body at which the surface area of the bottom plate is smaller to the end, which is at the side opposite the bottom plate, of a side plate of the metal exterior body at which the surface area of the bottom plate is larger (distance L2 in Fig. 1, called "sealing portion length" in Fig. 7), the more that permeation of moisture is suppressed.

An aspect has been described in which, in the battery 10 illustrated in Fig. 1 and Fig. 3, both the positive electrode metal exterior body 41 and the negative electrode metal exterior body 42 are box-shaped, and the surface area of the bottom plate 42A at the negative electrode metal exterior body 42 is larger than that of the bottom plate 41A at the positive electrode metal exterior body 41, and all of the side plates 41B of the positive electrode metal exterior body 41 are accommodated at the inner sides of all of the side plates 42B of the negative electrode metal exterior body 42. However, the present disclosure is not limited to this, and, in the battery relating to the present disclosure, it suffices for at least one of the positive electrode metal exterior body or the negative electrode metal exterior body to be shaped as a box.

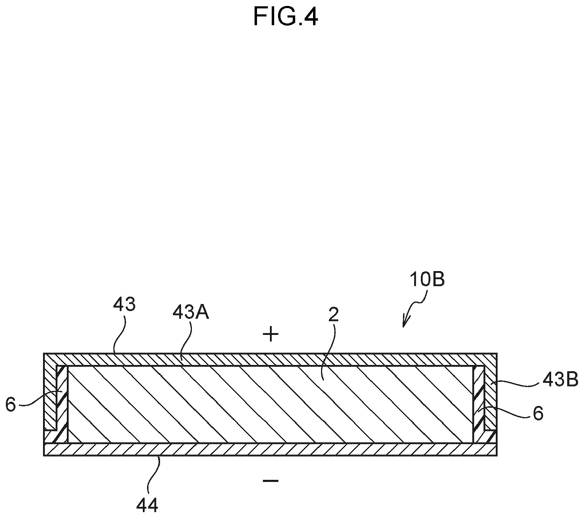

A battery relating to another embodiment of the present disclosure is described here. Fig. 4 is a schematic sectional view illustrating a battery relating to another embodiment of the present disclosure. Note that the electrode body 2, the positive electrode foil and the negative electrode foil are similar to those illustrated in Fig. 1 and Fig. 2, and description thereof is omitted.

In battery 10B illustrated in Fig. 4, positive electrode metal exterior body 43 of a metal exterior body pair is formed of a metal and is disposed so as to contact the positive electrode foil. Negative electrode metal exterior body 44 is formed of a metal and is disposed so as to contact the negative electrode foil. At least portions of the outer surfaces of both the positive electrode metal exterior body 43 and the negative electrode metal exterior body 44 of the metal exterior body pair are exposed such that electrical connection with the exterior is enabled. As illustrated in Fig. 4, the positive electrode metal exterior body 43 is formed in the shape of a box having a bottom plate 43A that is quadrilateral and four side plates 43B that each share one side with the bottom plate 43A. The positive electrode metal exterior body 43 houses the electrode body 2 at the inner side of the box shape that is formed by the bottom plate 43A and the side plates 43B. The negative electrode metal exterior body 44 is formed by a quadrilateral, plate-shaped member.

At the battery 10B illustrated in Fig. 4, the electrode body 2 and the metal exterior body pair formed by the positive electrode metal exterior body 43 and the negative electrode metal exterior body 44 are fixed by using only one type of resin 6. The resin 6 is interposed between the side surfaces of the electrode body 2 and the side plates 43B of the positive electrode metal exterior body 43, and the side surfaces of the electrode body 2 are covered by the resin 6. The side surfaces of the electrode body 2 are insulated by the resin 6 from the metal exterior body pair that is formed from the positive electrode metal exterior body 43 and the negative electrode metal exterior body 44. Further, the positive electrode metal exterior body 43 and the negative electrode metal exterior body 44 are insulated by the resin 6. The positive electrode metal exterior body 43, the negative electrode metal exterior body 44 and the side surfaces of the electrode body 2 are respectively insulated by the resin 6. The occurrence of short-circuiting is thereby suppressed.

Even in a case in which only one of the positive electrode metal exterior body and the negative electrode metal exterior body is formed in the shape of a box as in the battery 10B illustrated in Fig. 4, the strength and the moisture permeation resistance (water vapor barrier ability) required of the battery can be ensured, and the structural efficiency can be improved.

<Battery Members>

The respective members that structure the battery relating to the present disclosure are described next.

(1) Metal Exterior Body Pair

The positive electrode metal exterior body and the negative electrode metal exterior body are formed of metal. Examples of the metal materials are aluminum, aluminum alloys, stainless steel, copper, copper alloys, nickel steel, and the like.

The thickness of the positive electrode metal exterior body and the negative electrode metal exterior body is, for example, 0.05 mm or more and 2.0 mm or less.

(2) Resin

The battery 10 illustrated in Fig. 1 has the resin 6A that is interposed between the side surfaces of the electrode body 2 and the side plates 41B of the positive electrode metal exterior body 41, and the resin 6B that is interposed between the side plates 41B of the positive electrode metal exterior body 41 and the side plates 42B of the negative electrode metal exterior body 42. In this way, at the battery relating to the present disclosure, it is preferable that the first resin that is interposed between the side surfaces of the electrode body and the side plates of the metal exterior body at which the surface area of the bottom plate is smaller, and the second resin that is interposed between the side plates of the metal exterior body at which the surface area of the bottom plate is smaller and the side plates of the metal exterior body at which the surface area of the bottom plate is larger, be different types of resin.

Further, it is preferable that the first resin and the second resin have different performances.

Namely, it is preferable that the first resin be a resin whose insulating ability is better than that of the second resin, and that the second resin be a resin whose moisture permeation resistance is better than that of the first resin. Owing to this structure, the insulating ability between the side surfaces of the electrode body and the metal exterior body pair can be improved by the first resin that has a good insulating ability, and the moisture permeation resistance (water vapor barrier ability) of the battery can be improved by the second resin that has good moisture permeation resistance.

Resins having good insulating ability mean resins whose electrical resistance at the time when current passes through the resin is higher.

Resins having good moisture permeation resistance mean resins at which the amount of water vapor per 1 $m^2$ unit surface area that, in a 24-hour period, passes-through a resin placed between two spaces having a difference in relative humidities, is small.

Examples of the first resin whose insulating ability is good are polyethylene (PE), polyamide (PA), polyester (PEs), polypropylene (PP), polyetherimide (PEI), polytetrafluoroethylene (PTFE), polyurethane (TPU) and the like. Examples of the second resin that has good moisture permeation resistance are polyethylene (PE), polypropylene (PP), polystyrene (PS), cyclic olefin copolymer (COC) and the like.

Note that, in a case in which only one type of resin is used in the battery, the resins exemplified above can be used.

(3) Electrode Body

The electrode body usually has a collector, a positive electrode active material layer, an electrolyte layer and a negative electrode active material layer. In the present disclosure, the battery may have a layered-type electrode body in which plural electrode bodies are layered, or may have only one electrode body.

Note that the electrode body preferably is a structure in which plural bipolar electrodes are layered via solid electrolyte layers. More specifically, the electrode body is preferably a layered bipolar solid electrode body having: a bipolar electrode having a collector and electrode active material layers including a positive electrode active material layer formed on one surface of the collector and a negative electrode active material layer formed on another surface of the collector; and a solid electrolyte layer containing a solid electrolyte, and having a structure in which plural bipolar electrodes are layered via solid electrolyte layers.

The positive electrode active material layer contains at least a positive electrode active material. The positive electrode active material layer may further contain at least one of a conductive material, an electrolyte and a binder. The shape of the positive electrode active material is particle-shaped for example. Oxide active materials are examples of the positive electrode active material. Further, sulfur (S) may be used as the positive electrode active material.

The positive electrode active material preferably contains a lithium composite oxide. The lithium composite oxide contains at least one type selected from the group consisting of F, Cl, N, S, Br and I. Further, the lithium composite oxide may have a crystal structure belonging to at least one space group selected from space groups R-3m, Immm, and P63-mmc (also called P63mc, P6/mmc). In the lithium composite oxide, the main sequence of a transition metal, oxygen and lithium may be an O2-type structure.

Examples of lithium composite oxides having a crystal structure belonging to R-3m are compounds expressed by $Li_xMe_yO_\alpha X_\beta$ (Me represents at least one type selected from the group consisting of Mn, Co, Ni, Fe, Al, Cu, V, Nb, Mo, Ti, Cr, Zr, Zn, Na, K, Ca, Mg, Pt, Au, Ag, Ru, W, B, Si and P, and X represents at least one type selected from the group consisting of F, Cl, N, S, Br and I, and $0.5 < x < 1.5$, $0.5 \le y \le 1.0$, $1 \le \alpha < 2$, $0 < \beta \le 1$ are satisfied).

Examples of lithium composite oxides having a crystal structure belonging to Immm are composite oxides expressed by $Li_{x1}M^1A^12$ ($1.5 \le x1 \le 2.3$ is satisfied, $M^1$ includes at least one type selected from the group consisting of Ni, Co, Mn, Cu and Fe, $A^1$ includes at least oxygen, and the ratio of the oxygen contained in $A^1$ is greater than or equal to 85 atom%) (a specific example is $Li_2NiO_2$), and composite oxides expressed by $Li_{x1}M^{1A}_{1-x2}M^{1B}_{x2}O_{2-y}A^2_y$ ($0 \le x2 \le 0.5$ and $0 \le y \le 0.3$, at least one of x2 and y is not 0, $M^{1A}$ represents at least one type selected from the group consisting of Ni, Co, Mn, Cu and Fe, $M^{1B}$ represents at least one type selected from the group consisting of Al, Mg, Sc, Ti, Cr, V, Zn, Ga, Zr, Mo, Nb, Ta and W, and A2 represents at least one type selected from the group consisting of F, Cl, Br, S and P).

Examples of lithium composite oxides having a crystal structure belonging to P63-mmc are composite oxides expressed by $M1_xM2_yO_2$ (M1 represents an alkali metal (at least one of Na and K is preferable), M2 represents a transition metal (at least one type selected from the group consisting of Mn, Ni, Co and Fe is preferable), and x+y satisfies $0 < x+y \le 2$).

Examples of lithium composite oxides having an O2-type structure are composite oxides expressed by $Li_x[Li_\alpha(Mn_aCo_bM_c)_{1-\alpha}]O_2$ ($0.5 < x < 1.1$, $0.1 < \alpha < 0.33$, $0.17 < a < 0.93$, $0.03 < b < 0.50$, $0.04 < c < 0.33$, and M represents at least one type selected from the group consisting of Ni, Mg, Ti, Fe, Sn, Zr, Nb, Mo, W and Bi). Specific examples are $Li_{0.744}[Li_{0.145}Mn_{0.625}Co_{0.115}Ni_{0.115}]O_2$ and the like.

In addition to the positive electrode active material, the positive electrode preferably contains a solid electrolyte selected from the group of solid electrolytes consisting of sulfide solid electrolytes, oxide solid electrolytes, and halide solid electrolytes. A form in which at least a portion of the surface of the positive electrode active material is covered by a sulfide solid electrolyte, an oxide solid electrolyte or a halide solid electrolyte is more preferable. $Li_{6-(4-x)b}(Ti_{1-x}Al_x)_bF_6$ ($0 < x < 1$, $0 < b \le 1.5$) [LTAF electrolyte] is preferable as the halide solid electrolyte that covers at least a portion of the surface of the positive electrode active material.

Carbon materials are examples of the conductive material. The electrolyte may be a solid electrolyte or may be a liquid electrolyte, but a solid electrolyte is preferable. The solid electrolyte may be an organic solid electrolyte such as a gel electrolyte or the like, or may be an inorganic solid electrolyte such as an oxide solid electrolyte, a sulfide solid electrolyte or the like. Liquid electrolytes (electrolytic liquids) include, for example, supporting salts such as $LiPF_6$ and the like, and solvents such as carbonate solvents and the like. Further, examples of the binder are rubber binders and fluoride binders.

The negative electrode active material layer contains at least a negative electrode active material. The negative electrode active material layer may further contain at least one of a conductive material, an electrolyte, and a binder.

Examples of the negative electrode active material are metal active materials such as Li, Si and the like, carbon active materials such as graphite and the like, and oxide active materials such as $Li_4Ti_5O_{12}$ and the like. The shape of the negative electrode active material is, for example, particulate-shaped or foil-shaped. The conductive material, the electrolyte and the binder are similar to those described above.

The electrolyte layer is disposed between the positive electrode active material layer and the negative electrode active material layer, and contains at least an electrolyte. The electrolyte may be a solid electrolyte or may be a liquid electrolyte. It is preferable that the electrolyte layer be a solid electrolyte layer. The electrolyte layer may have a separator.

The solid electrolyte preferably includes at least one type of solid electrolyte selected from the group of solid electrolytes consisting of sulfide solid electrolytes, oxide solid electrolytes and halide solid electrolytes.

The sulfide solid electrolyte preferably contains sulfur (S) as the main component that is an anion element, and further, preferably contains, for example, the element Li, element A and the element S. Element A is at least one type selected from the group consisting of P, As, Sb, Si, Ge, Sn, B, Al, Ga and In. The sulfide solid electrolyte may further contain at least one of O and a halogen element. Examples of the halogen element (X) are F, Cl, Br, I and the like. The composition of the sulfide solid electrolyte is not particularly limited, and examples are $xLi_2S \cdot (100-x)P_2S_5$ $(70 \leq x \leq 80)$ and $yLiI \cdot zLiBr \cdot (100-y-z)(xLi_2S \cdot (1-x)P_2S_5)$ $(0.7 \leq x \leq 0.8, 0 \leq y \leq 30, 0 \leq z \leq 30)$. The sulfide solid electrolyte may have the composition expressed by following general formula (1).

$$Li_{4-x}Ge_{1-x}P_xS_4 \ (0<x<1) \ ... \qquad \text{formula (1)}$$

In formula (1), at least a portion of Ge may be substituted by at least one selected from the group consisting of Sb, Si, Sn, B, Al, Ga, In, Ti, Zr, V and Nb. Further, at least a portion of P may be substituted by at least one selected from the group consisting of Sb, Si, Sn, B, Al, Ga, In, Ti, Zr, V and Nb. A portion of Li may be substituted by at least one selected from the group consisting of Na, K, Mg, Ca and Zn. A portion of S may be substituted by a halogen. The halogen is at least one of F, Cl, Br and I.

The oxide solid electrolyte preferably contains oxygen (O) as the main component that is an anion element, and, for example, may contain Li, element Q (Q represents at least one of Nb, B, Al, Si, P, Ti, Zr, Mo, W and S), and O. Examples of the oxide solid electrolyte are garnet type solid electrolytes, perovskite type solid electrolytes, NASICON type solid electrolytes, Li-P-O solid electrolytes, Li-B-O solid electrolytes, and the like. Examples of garnet type solid electrolytes are $Li_7La_3Zr_2O_{12}$, $Li_{7-x}La_3(Zr_{2-x}Nb_x)O_{12}$ $(0 \leq x \leq 2)$, $Li_5La_3Nb_2O_{12}$, and the like. Examples of perovskite type solid electrolytes are $(Li,La)TiO_3$, $(Li,La)NbO_3$, $(Li,Sr)(Ta,Zr)O_3$ and the like. Examples of NASICON type solid electrolytes are $Li(Al,Ti)(PO_4)_3$, $Li(Al,Ga)(PO_4)_3$, and the like. Examples of Li-P-O solid electrolytes are $Li_3PO_4$ and LIPON (compounds in which some of the O in $Li_3PO_4$ is substituted with N). Examples of Li-B-O solid electrolytes are $Li_3BO_3$, compounds in which some of the O in $Li_3BO_3$ is substituted with C, and the like.

As the halide solid electrolyte, solid electrolytes containing Li, M and X (M represents at least one of Ti, Al and Y, and X represents F, Cl or Br) are suitable. Specifically, $Li_{6-3z}Y_zX_6$ (X represents Cl or Br, and z satisfies $0<z<2$) and $Li_{6-(4-x)b}(Ti_{1-x}Al_x)_bF_6$ $(0<x<1, 0<b \leq 1.5)$ are preferable. Among $Li_{6-3z}Y_zX_6$, from the standpoint of having excellent lithium ion conductivity, $Li_3YX_6$ (X represents Cl or Br) is more preferable, and $Li_3YCl_6$ is even more preferable. Further, from standpoints such as, for example, suppressing oxidative decomposition of the sulfide solid electrolyte and the like, it is preferable that $Li_{6-(4-x)b}(Ti_{1-x}Al_x)_bF_6$ $(0<x<1, 0<b \leq 1.5)$ be contained together with a solid electrolyte such as a sulfide solid electrolyte or the like.

In the case of a bipolar electrode, a collector that is electrically conductive and that can form a positive electrode active material layer and a negative electrode active material layer is used. Examples are stainless steel, aluminum, nickel, iron, titanium, carbon, copper and the like. The form of the collector is, for example, the form of a foil or the form of a mesh.

On the other hand, the electrode body may have a structure in which a positive electrode collector, a positive electrode active material layer, an electrolyte layer, a negative electrode active material layer and a negative electrode collector are layered in that order. The positive electrode collector carries out power collection of the positive electrode active material layer. Examples of the positive electrode collector are stainless steel, aluminum, nickel, iron, titanium, carbon and the like, and an aluminum alloy foil or an aluminum foil is preferable. The aluminum alloy foil or aluminum foil may be manufactured by using a powder. Examples of the form of the positive electrode collector are the form of a foil and the form of a mesh. The positive electrode collector may have a positive electrode tab for connection with a positive electrode collector terminal.

The negative electrode collector carries out power collection of the negative electrode active material layer. Examples of the material of the negative electrode collector are metals such as copper, SUS, nickel and the like. Examples of the form of the negative electrode collector are the form of a foil and the form of a mesh. The negative electrode collector may have a negative electrode tab for connection with a negative electrode collector terminal.

(4) Positive Electrode Foil and Negative Electrode Foil

A positive electrode foil is provided at the surface, which is at the positive electrode side, of the electrode body. A negative electrode foil is provided at the surface, which is at the negative electrode side.

Examples of the positive electrode foil are stainless steel, aluminum, nickel, iron, titanium, carbon and the like.

Examples of the negative electrode foil are copper, SUS, nickel and the like.

(5) Battery

The battery of the present disclosure is preferably a solid-state battery. Solid-state batteries include so-called all-solid-state batteries that use an inorganic solid electrolyte as the electrolyte (batteries using a solid electrolyte and not using an electrolytic liquid).

The structure of the solid-state battery is a layered structure of a positive electrode / a solid electrolyte layer / a negative electrode.

The positive electrode has a positive electrode active material layer and a collector. The negative electrode has a negative electrode active material layer and a collector.

The solid electrolyte layer may be a single layer structure, or may be a multilayer structure of two or more layers.

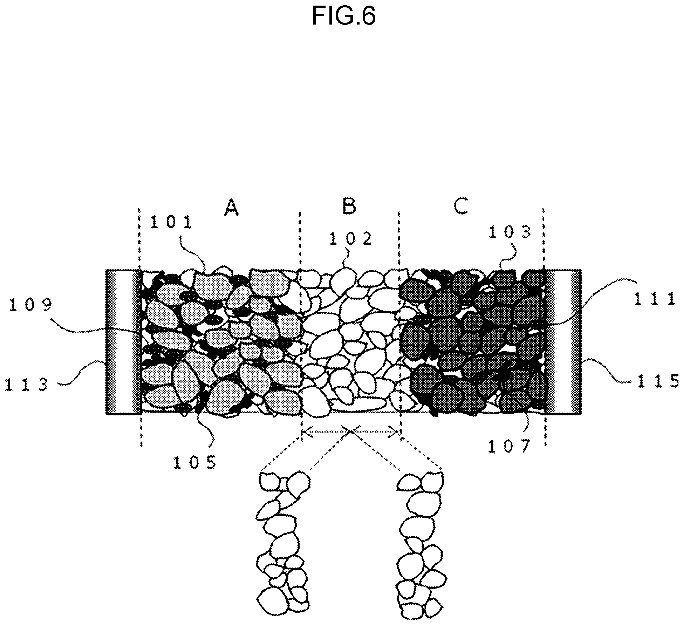

For example, the solid-state battery may have the cross-sectional structure illustrated in Fig. 6, and solid electrolyte layer B may be a two-layer structure as illustrated in Fig. 6. Fig. 6 is a schematic sectional view illustrating an example of a solid-state battery. The solid-state battery illustrated in Fig. 6 has a negative electrode including a negative electrode collector 113 and a negative electrode active material layer A, and the solid electrolyte layer B, and a positive electrode including a positive electrode collector 115 and positive electrode active material layer C. The negative electrode active material layer A includes a negative electrode active material 101, a conduction assistant 105 and a binder 109. The positive electrode active material layer C includes a covered positive electrode active material 103, a conduction assistant 107 and a binder 111. In the covered positive electrode active material 103, the surface of a positive electrode active material is covered by an LTAF electrolyte or an $LiNbO_3$ electrolyte.

Further, the solid-state battery may be structured such that the layer end surfaces (side surfaces) of a layered structure of a positive electrode / a solid electrolyte layer / a negative electrode are sealed by a resin. The collector of the electrode may be a structure in which a shock-absorbing layer, an elastic layer or a PTC (Positive Temperature Coefficient) thermistor layer is disposed on the surface of the collector.

An example of the intended use of the battery is the power source of a vehicle such as, for example, a hybrid vehicle (HEV), a plug-in hybrid vehicle (PHEV), an electric vehicle (BEV), a gasoline-powered vehicle, a diesel-powered vehicle or the like. The battery is particularly preferably used as the power source for driving of an HEV, a PHEV or a BEV. Further, the battery of the present disclosure may be used as the power source of a moving body other than a vehicle (e.g., a train, a boat, an airplane), or may be used as the power source of an electronic product such as an information processing device or the like.

The present disclosure is not limited to the above-described embodiments. The above embodiments are illustrative, and all forms that have substantially the same structures as, and exhibit similar operations and effects as, the technical concepts put forth in the claims of the present disclosure are included in the technical scope of the present disclosure. Explanation of Reference Numerals

| | |
|---|---|
| 2 | electrode body |
| 2A | positive electrode foil |
| 2B | negative electrode foil |
| 41, 43 | positive electrode metal exterior body |
| 42, 44 | negative electrode metal exterior body |
| 41A, 42A, 43A | bottom plate |
| 41B, 42B, 43B | side plate |
| 6, 6A, 6B | resin |
| 10, 10B, 20 | battery |
| 22 | electrode body |
| 24A, 24B | laminate film |
| 28 | terminal |
| 101 | negative electrode active material |
| 103 | covered positive electrode active material |
| 105, 107 | conduction assistant |
| 109, 111 | binder |
| 113 | negative electrode collector |

| 115 | positive electrode collector |
| A | negative electrode active material layer |
| B | solid electrolyte layer |
| C | positive electrode active material layer |

**Claims**

1. A battery (10) comprising:

   an electrode body (2);
   a positive electrode foil (2A) provided at one surface of the electrode body (2);
   a negative electrode foil (2B) provided at another surface of the electrode body (2);
   a metal exterior body pair formed from a positive electrode metal exterior body (41) that contacts the positive electrode foil (2A) and is formed of metal, and a negative electrode metal exterior body (42) that contacts the negative electrode foil (2B) and is formed of metal; and
   a resin (6A,6B) that fixes the electrode body (2) and the metal exterior body pair,
   wherein outer surfaces of the metal exterior body pair are exposed so as to enable electrical connection with an exterior,
   wherein at least one of the positive electrode metal exterior body (41) or the negative electrode metal exterior body (42) is shaped as a box having a bottom plate (41A,42A) that is quadrilateral and four side plates (41B, 42B) that each share one side with the bottom plate (41A,42A), and accommodates the electrode body (2) at an inner side of the box shape, and
   wherein the positive electrode metal exterior body (41), the negative electrode metal exterior body (42), and side surfaces of the electrode body (2) are respectively insulated by the resin (6A,6B).

2. The battery (10) according to claim 1, wherein:

   the positive electrode metal exterior body (41) and the negative electrode metal exterior body (42) are both box shaped,
   the positive electrode metal exterior body (41) and the negative electrode metal exterior body (42) overlap such that sides of the positive electrode metal exterior body (41) and the negative electrode metal exterior body (42) having the side plates (41B,42B) face one another, and
   a surface area of one of the bottom plate (41A) of the positive electrode metal exterior body (41) or the bottom plate (42A) of the negative electrode metal exterior body (42) is larger than another, and all of the side plates (41B) of the metal exterior body at which a surface area of the bottom plate (41A) is smaller are accommodated at inner sides of all of the side plates (42B) of the metal exterior body at which a surface area of the bottom plate (42A) is larger.

3. The battery (10) according to claim 2, wherein:

   the battery (10) has, as the resin (6A,6B), a first resin (6A) that is interposed between the side surfaces of the electrode body (2) and the side plates (41B) of the metal exterior body at which the surface area of the bottom plate (41A) is smaller, and a second resin (6B) that is interposed between the side plates (41B) of the metal exterior body at which the surface area of the bottom plate (41A) is smaller and the side plates (42B) of the metal exterior body at which the surface area of the bottom plate (42A) is larger,
   the first resin (6A) is a resin that has a better insulating ability than the second resin (6B), and
   the second resin (6B) is a resin that has better moisture permeation resistance than the first resin (6A).

4. The battery (10) according to claim 2 or 3, wherein the metal exterior body at which the surface area of the bottom plate (42A) is larger is the negative electrode metal exterior body (42).

5. The battery (10) according to any one of claim 2 to 4, wherein:

   the resin (6A,6B) is filled-in between the side surfaces of the electrode body (2) and the side plates (41B) of the metal exterior body at which the surface area of the bottom plate (41A) is smaller, and between the side plates (41B) of the metal exterior body at which the surface area of the bottom plate (41A) is smaller and the side plates (42B) of the metal exterior body at which the surface area of the bottom plate (42A) is larger,

a distance (L 1) from the side plate (41B) of the metal exterior body at which the surface area of the bottom plate (41A) is smaller to the side plate (42B) of the metal exterior body at which the surface area of the bottom plate (42A) is larger is from 0.1 mm to 1.0 mm, and

a distance (L2) in a thickness direction of the electrode body (2) from an end, which is at a side opposite the bottom plate (41A), at the side plate (41B) of the metal exterior body at which the surface area of the bottom plate (41A) is smaller to an end, which is at the side opposite the bottom plate (42A), at the side plate (42B) of the metal exterior body at which the surface area of the bottom plate (42A) is larger is from 1.0 mm to 50.0 mm.

6. The battery (10) according to any one of claim 1 to 5, wherein the battery (10) is a solid-state battery.

7. The battery (10) according to any one of claim 1 to 6, wherein, at the electrode body (2), a plurality of bipolar electrodes are layered via solid electrolyte layers.

# FIG.1

FIG.2

# FIG.3

# FIG.4

FIG.5

FIG.6

# FIG.7

SEALING PORTION LENGTH/THICKNESS AND MOISTURE PERMEATION AMOUNT
(70 mm × 70 mm SQUARE BATTERY)

Europäisches
Patentamt

European
Patent Office

Office européen
des brevets

# EUROPEAN SEARCH REPORT

**Application Number**

EP 24 15 1620

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 217 158 389 U (GUIZHOU ZHONGRUI FENGTAI NEW ENERGY TECH CO LTD) 9 August 2022 (2022-08-09) * pages 3,4; figures 1,3 * | 1,2,4,5 | INV. H01M10/04 H01M50/102 H01M50/103 |
| Y | | 6,7 | |
| A | | 3 | |
| Y | US 2004/253512 A1 (WATANABE KYOICHI [JP] ET AL) 16 December 2004 (2004-12-16) * the whole document * | 6,7 | |

**TECHNICAL FIELDS SEARCHED (IPC)**

H01M

The present search report has been drawn up for all claims

| Place of search | Date of completion of the search | Examiner |
|---|---|---|
| Munich | 14 June 2024 | Möller, Claudia |

EPO FORM 1503 03.82 (P04C01)

## ANNEX TO THE EUROPEAN SEARCH REPORT
## ON EUROPEAN PATENT APPLICATION NO.

EP 24 15 1620

This annex lists the patent family members relating to the patent documents cited in the above-mentioned European search report.
The members are as contained in the European Patent Office EDP file on
The European Patent Office is in no way liable for these particulars which are merely given for the purpose of information.

14-06-2024

| Patent document cited in search report | | Publication date | Patent family member(s) | | Publication date |
|---|---|---|---|---|---|
| CN 217158389 | U | 09-08-2022 | NONE | | |
| US 2004253512 | A1 | 16-12-2004 | EP | 1487034 A2 | 15-12-2004 |
| | | | JP | 4238645 B2 | 18-03-2009 |
| | | | JP | 2005005163 A | 06-01-2005 |
| | | | KR | 20040107372 A | 20-12-2004 |
| | | | US | 2004253512 A1 | 16-12-2004 |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021150073 A
- JP 2017220447 A
- WO 2021149644 A